# EUROPÄISCHE PATENTSCHRIFT

(11) **EP 3 452 345 B1**
(45) Veröffentlichungstag und Bekanntmachung des Hinweises auf die Patenterteilung: **08.06.2022**
(21) Anmeldenummer: 17723929.0
(22) Anmeldetag: 25.04.2017
(51) Int. Cl.: B60T 8/40, H02K 7/14, F04B 17/03

(54) **AKTUATOREINRICHTUNG FÜR EIN FAHRZEUG, BREMSSYSTEM**
ACTUATOR DEVICE FOR A VEHICLE, BRAKING SYSTEM
DISPOSITIF ACTIONNEUR POUR VÉHICULE, SYSTÈME DE FREINAGE

(30) Priorität: 03.05.2016 DE 102016207659
(43) Veröffentlichungstag der Anmeldung: 13.03.2019
(73) Patentinhaber: Robert Bosch GmbH, 70442 Stuttgart (DE)
(72) Erfinder: SCHLITZKUS, Michael, 87463 Dietmannsried (DE); LEIBFRIED, Oliver, 74936 Siegelsbach (DE); KLEIN, Wolfgang, 72770 Reutlingen (DE); ZANDER, Thomas, 88085 Langenargen (DE); EMDE, Christoph, 74211 Leingarten (DE); SEEGER-GLUECK, Andreas, 73565 Spraitbach (DE)
(86) Internationale Anmeldenummer: PCT/EP2017/059723
(87) Internationale Veröffentlichungsnummer: WO 2017/190977

(56) Entgegenhaltungen:
- WO-A1-02/060734
- WO-A1-2016/119987
- DE-A1- 10 245 069
- DE-A1-102007 001 733
- DE-A1-102007 010 960
- DE-A1-102014 214 095
- DE-A1-102014 221 015

## Beschreibung

Die Erfindung betrifft eine Aktuatoreinrichtung für ein Fahrzeug, insbesondere für ein Bremssystem eines Kraftfahrzeugs, mit wenigstens einem elektronisch kommutierten Elektromotor, der einen auf einer drehbar gelagerten Welle drehfest angeordneten Rotor aufweist, und mit wenigstens einem Drehwinkelsensor zum Erfassen einer Drehstellung des Rotors, wobei die Welle mit wenigstens einem durch den Elektromotor anzutreibenden Verbraucher verbunden ist.

Ferner betrifft die Erfindung ein Bremssystem für ein Fahrzeug, insbesondere Kraftfahrzeug, mit wenigstens einer Radbremse und mit wenigstens einer Aktuatoreinrichtung zum Betätigen dieser Radbremse.

### Stand der Technik

Aktuatoreinrichtungen für Kraftfahrzeuge sind insbesondere im Zusammenhang mit hydraulischen Bremssystemen bekannt, bei welchen eine Bremskraft durch einen hydraulischen Druck eingestellt wird. Dazu weisen derartige Bremssysteme üblicherweise Aktuatoren, insbesondere Hydraulikpumpen und/oder betätigbare Ventile auf, mittels derer ein gewünschter Hydraulikdruck und damit eine gewünschte Bremskraft einstellbar sind. Häufig wird als Aktuator zum Antreiben einer Hydraulikpumpe als Verbraucher ein Elektromotor verwendet. Dazu ist beispielsweise ein Pumpenrad der Hydraulikpumpe drehfest auf der gleichen Welle angeordnet, auf welcher auch der Rotor des Elektromotors sitzt. Dabei werden heutzutage fast ausschließlich Gleichstrommotoren eingesetzt, weil diese günstig und über zwei elektrische Leitungen auf einfache und kostengünstige Art und Weise mit der Ansteuerelektronik verbindbar sind. Jedoch haben derartige Gleichstrommotoren gegenüber elektronisch kommutierten Elektromotoren Nachteile, insbesondere aufgrund ihrer mechanischen Kommutierung sowie aufgrund ihrer geringen Dynamik und ihrer fordernden Baugröße.

Um jedoch elektrisch kommutierte Elektromotoren optimal einsetzen zu können, ist es erforderlich, die genaue Position des Rotors des Elektromotors zu kennen. Üblicherweise werden dazu ein oder mehrere Drehwinkelsensoren verwendet, die dem Elektromotor zugeordnet sind, um die Rotorposition zu überwachen. Häufig werden dazu Drehwinkelsensoren verwendet, die direkt in dem Elektromotor ein beziehungsweise an diesem angebaut sind und zusammen mit einer Ansteuerelektronik als komplette Motoreinheit zur Verfügung gestellt werden. Bei einigen Fahrzeugregelsystemen, wie insbesondere Bremssystemen, hat dies jedoch den Nachteil, dass beim Einsatz eines derartigen Elektromotors neben den mindestens drei Anschlüssen für die Leistungselektronik auch Anschlüsse und Verbindungen für die Sensorsignale des Drehwinkelsensors vorhanden sein müssen, was zu zusätzlichem Leistungsaufwand führt.

Aus der Offenlegungsschrift DE 10 2007 010 960 A1 ist bereits ein Motor-Pumpenaggregat bekannt, mit einem Gleichstrommotor, der an einer Oberseite eines Aufnahmekörpers für wenigstens eine Pumpeneinheit angeordnet ist, und einen Rotor mit einer Antriebswelle und einem Stator umfasst, sowie mit einer Elektronikeinheit zur elektronischen Steuerung- und/oder Regelung von dem Motor-Pumpenaggregat, wobei zwischen Rotor und Stator ein ebener Luftspalt vorgesehen ist.

Aus der Offenlegungsschrift DE 10 2014 214 095 A1 ist bereits ein Aktuator für eine elektrohydraulische Bremsanlage bekannt, der zum aktiven Druckaufbau in wenigstens einer Radbremse angesteuert werde kann, mit einem Gehäuse, umfassend ein Elektromotor mit einem Rotor und einem Stator und einem hydraulischen Druckraum, in dem zum Druckaufbau ein Druckkolben verschoben wird und ein Rotations-Translationsgetriebe, das eine rotatorische Bewegung des Rotors in eine translatorische Bewegung des Druckkolbens umwandelt, wobei der Druckraum als Ringkolbenkammer ausgebildet ist.

Aus der Offenlegungsschrift DE 10 2007 001 733 A1 ist ein Motor-Pumpenaggregat für eine Kraftfahrzeugbremsanlage bekannt, mit einem Motor, welcher über eine Motorwelle eine Pumpe antreibt, die in einem Hydraulikgehäuse einer Hydraulikeinheit angeordnet ist und Hydraulikflüssigkeit in Radbremsen der Kraftfahrzeugbremsanlage fördert, wobei Mittel zur elektrischen Kontaktierung des Motors mit einer Platine in einem Elektronikgehäuse einer Elektronikeinheit vorgesehen sind, wobei der Motor derart im Hydraulikgehäuse angeordnet ist, dass seine Bauteile zum Teil aus dem Hydraulikgehäuse herausragen, und dass das Elektronikgehäuse derart ausgestaltet ist, dass eine direkte Verbindung zwischen Bauteilen des Motors und der Platine ermöglicht ist.

### Offenbarung der Erfindung

Die erfindungsgemäße Aktuatoreinrichtung mit den Merkmalen des Anspruchs 1 hat hingegen den Vorteil, dass trotz der Verwendung eines elektronisch kommutierten Elektromotors der elektrische Verbindungsaufwand beziehungsweise der Verkabelungsaufwand sowie der Bauraumbedarf gering ausfallen. Aufgrund des Entfalls einer umständlichen Anbindung des Drehwinkelsensors an die Ansteuerelektronik wird auch die Störanfälligkeit der Sensorleitung beziehungsweise der Verbindungsleitung zwischen Drehwinkelsensor und Ansteuerelektronik reduziert. Darüber hinaus ist durch die erfindungsgemäße Lösung der Drehwinkelsensor in dem geschützten Bereich der Aktuatoreinrichtung anordenbar, in welchem er vor äußeren Einflüssen geschützt ist. Erfindungsgemäß wird dies dadurch erreicht, dass der Drehwinkelsensor einem dem Verbraucher zugeordneten Ende der Welle zugeordnet ist. Dadurch, dass der Drehwinkelsensor dem den Verbraucher zugeordneten Ende der Welle zugeordnet ist, liegt der Drehwinkelsensor beabstandet zu dem Elektromotor und insbesondere näher zu einer Ansteuerelektronik, sodass der Verkabelungsaufwand reduziert wird.

Besonders bevorzugt ist vorgesehen, dass der Verbraucher zwischen dem Elektromotor und dem Drehwinkelsensor angeordnet ist. Dadurch ergibt sich, dass der Drehwinkelsensor auf der dem Elektromotor abgewandten Seite des Verbrauchers angeordnet ist. Damit ist auch eine einfache Anbindung des Drehwinkelsensors an der Ansteuerelektronik, die insbesondere ebenfalls auf der dem Elektromotor abgewandten Seite des Verbrauchers liegt, gewährleistet.

Erfindungsgemäß ist vorgesehen, dass der Drehwinkelsensor einer Stirnseite der Welle an dem Ende der Welle gegenüberliegend angeordnet ist. Damit ist der Drehwinkelsensor besonders bauraumsparend dem Wellenende zugeordnet. Insbesondere ergibt sich hierdurch der Vorteil, dass die Welle kurzgebaut werden kann.

Bevorzugt weist das Ende der Welle, insbesondere die Stirnseite, wenigstens einen Drehwinkelgeber auf. Bei dem Drehwinkelgeber kann es sich beispielsweise um einen Permanentmagneten handeln, der fest mit der Welle verbunden ist, und sich somit mit dieser mitdreht. Der Drehwinkelsensor erfasst dann das magnetische Feld des Drehwinkelgebers, wobei in Abhängigkeit des erfassten magnetischen Feldes die Drehwinkelstellung der Welle und damit die des Rotors erfasst beziehungsweise bestimmt wird. Alternativ kann der Drehwinkelgeber eine optische Markierung sein, die von dem Drehwinkelsensor optisch erfasst wird.

Gemäß der Erfindung ist vorgesehen, dass die Aktuatoreinrichtung eine Steuerelektronik, insbesondere eine Leistungselektronik, aufweist, die zumindest eine Leiterplatte umfasst, wobei die Leiterplatte dem Ende der Welle zugeordnet ist. Damit ist auch die Steuerelektronik beziehungsweise die Leistungselektronik auf der dem Elektromotor abgewandten Seite des Verbrauchers angeordnet, sodass die vorteilhafte kurze Verkabelung zwischen Drehwinkelsensor und Ansteuerelektronik gewährleistet ist.

Erfindungsgemäß ist vorgesehen, dass der Drehwinkelsensor auf der Leiterplatte angeordnet ist. Dadurch kann auf eine zusätzliche Verkabelung letztendlich auch verzichtet werden. Insbesondere ist der Drehwinkelsensor dazu auf der Leiterplatte angelötet und dadurch elektrisch mit dieser verbunden.

Gemäß der Erfindung ist vorgesehen, dass die Leiterplatte in einem Gehäuse angeordnet ist, in welchem mehrere betätigbare Ventile, insbesondere Magnetventile, angeordnet sind, wobei der Drehwinkelsensor zwischen den Ventilen angeordnet ist. Die Aktuatoreinrichtung umfasst also neben dem Elektromotor auch noch weitere Aktuatoren, insbesondere die genannten Ventile oder Magnetventile. Die Aktuatoren sind zweckmäßigerweise in und/oder an einem gemeinsamen Gehäuse angeordnet, sodass die Aktuatoreinrichtung als kompakte Baueinheit gehandhabt werden kann, was eine Montage erleichtert. Insbesondere bei Bremssystemen sind derartige Einheiten bekannt, die beispielsweise als ABS-Einheit oder EPS-Einheit bekannt sind und neben einem durch einen Elektromotor angetriebenen Verbraucher als Druckerzeuger auch noch mehrere Ventile aufweisen, um den von dem Druckerzeuger zur Verfügung gestellten Hydraulikdruck bedarfsgerecht an unterschiedliche Radbremsen zu verteilen. In einer solchen Anordnung ist der Drehwinkelsensor vorzugsweise zwischen den Ventilen angeordnet, wie bereits erwähnt, sodass er bauraumsparend in dem Gehäuse anordenbar ist. Insbesondere wird dabei in der vorgenannten Konstellation erreicht, dass sich die Baulänge der Einheit beziehungsweise der Aktuatoreinrichtung durch das Zuordnen des Drehwinkelsensors insbesondere zu der Stirnseite der Welle nicht verändert. Insbesondere ist der Verbraucher als Hydraulikpumpe ausgebildet. Damit stellt der Verbraucher in diesem Fall einen Druckerzeuger dar, der den zum Betätigen der Radbremsen notwendigen hydraulischen Druck erzeugt. Die Hydraulikpumpe ist beispielsweise als Zahnradpumpe oder Kolbenpumpe ausgebildet.

Das erfindungsgemäße Bremssystem mit den Merkmalen des Anspruchs 5 zeichnet sich durch die erfindungsgemäße Aktuatoreinrichtung aus. Es ergeben sich hierbei die bereits genannten Vorteile. Insbesondere ist der Verbraucher als Hydraulikpumpe ausgebildet.

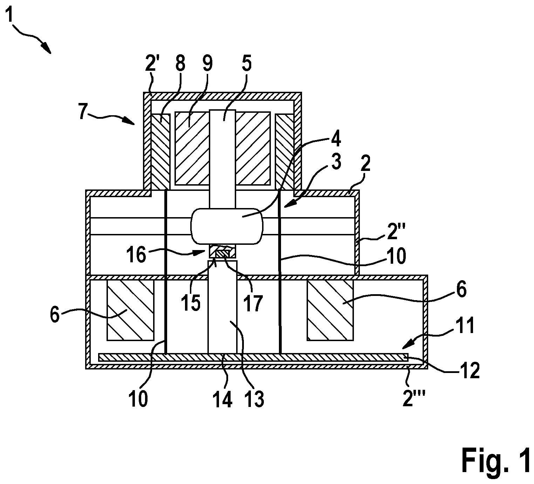

Weitere Vorteile und bevorzugte Merkmale und Merkmalskombinationen ergeben sich insbesondere aus dem zuvor beschriebenen sowie aus den Ansprüchen. Im Folgenden soll die Erfindung anhand der Zeichnung näher erläutert werden.

Dazu zeigt die einzige
- Figur: eine Aktuatoreinrichtung eines Bremssystems für ein Kraftfahrzeug in einer vereinfachten Schnittdarstellung.

Die einzige Figur zeigt in einer vereinfachten Schnittdarstellung eine Aktuatoreinrichtung 1 für ein hier nicht näher dargestelltes Bremssystem eines Kraftfahrzeugs. Die Aktuatoreinrichtung 1 weist ein Gehäuse 2 auf, in welchem eine Hydraulikpumpe 3 als Verbraucher angeordnet ist. Die Hydraulikpumpe 3 weist ein Pumpenrad 4 auf, das auf einer drehbar in dem Gehäuse 2 gelagerten Welle 5 angeordnet ist. Wird die Welle 5 antrieben, so fördert das Pumpenrad 4 Hydraulikmedium in Richtung von Radbremsen des Bremssystems. Um den durch die Hydraulikpumpe 3 erzeugten Hydraulikdruck gezielt auf die Radbremsen zu verteilen, sind in dem Gehäuse außerdem mehrere ansteuerbare Magnetventile 6 angeordnet, von denen hier nur bestrombare Spulen in der Figur gezeigt sind. Durch Betätigen beziehungsweise Ansteuern der Ventile 6 wird das Hydraulikmedium gezielt den einzelnen Radbremsen zugeführt, also gezielt Druck auf- oder abgebaut.

Um die Welle 5 anzutreiben, ist ein Elektromotor 7 vorhanden, der an dem Gehäuse 2 angeordnet ist und einen gehäusefesten Stator 8 sowie einen mit der Welle 5 drehfest verbundenen Rotor 9 aufweist. Der Elektromotor 7 ist als elektrisch kommutierter Elektromotor 7 ausgebildet und dazu mittels elektrischer Leitungen 10 mit der Ansteuerelektronik 11 verbunden. Die Ansteuerelektronik 11 weist eine Leiterplatte 12 auf, die auf der dem Elektromotor 7 abgewandten Seite der Hydraulikpumpe 3 in dem Gehäuse 2 angeordnet ist. Die elektrischen Leitungen 10 sind beispielsweise als Kabelverbindungen, Stanzgitterverbindungen oder als in dem Gehäuse 2 gedruckte Verbindungen ausgebildet, die von der Leiterplatte 12 zu den Wicklungen des Stators 8 des Elektromotors 7 führen. Die Ansteuerelektronik 11 ist als Leistungselektronik ausgebildet, welche auf der Leiterplatte 12 eine Schaltung zum gezielten Ansteuern mehrerer Phasen der Wicklung des Stators 8 aufweist. Insbesondere weist der Elektromotor 7 mindestens drei Phasen und damit auch wenigstens drei elektrische Verbindungen 10 auf.

Zwischen den betätigbaren Ventilen 6 ist an dem Gehäuse 2 außerdem ein Drehwinkelsensor 13 angeordnet, der an der Leiterplatte 12 an einer Befestigungsstelle 14 befestigt ist. Insbesondere ist der Drehwinkelsensor 13 an der Befestigungsstelle 14 mit der Leiterplatte 12 verlötet, sodass gleichzeitig mit der Befestigung auch eine elektrische Verbindung zwischen dem Drehwinkelsensor 13 und der Leiterplatte 12 beziehungsweise mit auf der Leiterplatte 12 ausgebildeten elektrischen Leitungen, insbesondere Leiterbahnen, hergestellt ist.

Der Drehwinkelsensor 13 ist einer freien Stirnseite 15 eines Endes 16 der Welle 5 zugeordnet, welches der Ansteuerelektronik 11 zugewandt ist und aus Sicht des Elektromotors 7 jenseits des Verbrauchers beziehungsweise der Hydraulikpumpe 3 liegt. Die Welle 5 weist ein dem Elektromotor 7 zugewandtes Ende und entsprechend ein dem Verbraucher beziehungsweise der Hydraulikpumpe 3 zugewandtes Ende 16 auf. Letzterem ist der Drehwinkelsensor 13, der zwischen den Magnetventilen in dem Gehäuse 2 liegt, zugeordnet, um eine Drehwinkelposition der Welle 5 und damit eine Drehwinkelposition des Rotors 9 des Elektromotors 7 zu erfassen. Bevorzugt ist an der Stirnseite 15 der Welle 5 dazu ein Drehwinkelgeber 17, insbesondere in Form eines oder mehrerer Permanentmagneten, angeordnet, deren Magnetfeld von dem Drehwinkelsensor 13 erfasst wird. Die Auswerteschaltung oder ein Mikroprozessor auf der Leiterplatte 11 ermittelt in Abhängigkeit von dem durch den Drehwinkelsensor 13 erfassten Magnetfeld die aktuelle Drehwinkelposition beziehungsweise Rotorwinkelposition des Elektromotors 7. In Abhängigkeit dieser ermittelten Rotorwinkelposition steuert die Ansteuerelektronik 11 die Phasen des Elektromotors 7 zu dessen Ansteuerung an.

Dadurch, dass der Drehwinkelsensor 13 dem dem Elektromotor 7 abgewandten Ende der Welle 5 zugeordnet ist, ergibt sich der Vorteil, dass eine elektrische Verbindung zwischen Ansteuerelektronik 11 vom Drehwinkelsensor 13 besonders einfach, insbesondere durch die zuvor erwähnte Lötverbindung herstellbar/hergestellt ist. Dadurch ergeben sich einerseits Bauraumvorteile und andererseits wird die Störanfälligkeit von separaten Datenleitungen beziehungsweise elektrischen Leitungen reduziert. Weil der Drehwinkelsensor 13 außerdem zwischen den Magnetventilen beziehungsweise den Ventilen 6 anordenbar/angeordnet ist, ergibt sich eine bauraumoptimierte Ausbildung der Aktuatoreinrichtung 1, insbesondere weil der Drehwinkelsensor 13 nunmehr in einem Bereich angeordnet ist, der üblicherweise oder bisher ungenutzt ist. Darüber hinaus befindet sich der Drehwinkelsensor 13 in einem geschützten Bereich innerhalb des Gehäuses 2, sodass er vor äußeren Einflüssen geschützt ist, wodurch eine hohe Lebensdauer gewährleistet werden kann.

Im Unterschied zu der hier in dem vorliegenden Ausführungsbeispiel vorgestellten Lösung mit einem magnetisch arbeitenden Drehwinkelsensor 13, ist es auch möglich, den Drehwinkelsensor 13 als optischen Sensor auszubilden, welcher die Drehwinkelposition der Welle 5 optisch, beispielsweise durch eine entsprechende Markierung an der Stirnseite 15 der Welle 5 erfasst beziehungsweise überwacht. Auch andere Sensorvarianten, die aus dem Stand der Technik bekannt sind, können hier Anwendung finden. Vorteilhaftweise wird die Aktuatoreinrichtung 1 als kompakte Baueinheit gefertigt, wobei Elektromotor 7, die Hydraulikpumpe 3 und die Steuerelektronik 11 jeweils ein eigenes Gehäuse 2', 2" beziehungsweise 2‴ aufweisen, die miteinander gefügt werden können, um die Aktuatoreinrichtung 11 zu bilden. Das Gehäuse 2‴ ist konsequenterweise als Steuergerätgehäuse ausgebildet, in welchem alle für die Ansteuerung des Elektromotors 7 notwendigen Schaltungen und/oder elektrische/elektronische Bauteile angeordnet sind.

## Patentansprüche

1. Aktuatoreinrichtung (1) für ein Fahrzeug, insbesondere für ein Bremssystem eines Kraftfahrzeugs, mit wenigstens einem elektronisch kommutierten Elektromotor (7), der einen auf einer drehbar gelagerten Welle (5) drehfest angeordneten Rotor (9) aufweist, und mit wenigstens einem Drehwinkelsensor (13) zum Erfassen einer Drehstellung des Rotors (9), wobei die Welle (5) mit wenigstens einem durch den Elektromotor (7) anzutreibenden Verbraucher (3) verbunden ist, wobei der Drehwinkelsensor (13) einem dem Verbraucher (3) zugeordneten Ende (16) der Welle (5) zugeordnet ist, wobei der Drehwinkelsensor (13) einer Stirnseite (15) der Welle (5) an dem Ende (16) der Welle (5) gegenüberliegend angeordnet ist und wobei die Aktuatoreinrichtung (1) durch eine Ansteuerelektronik (11) gekennzeichnet ist, insbesondere Leistungselektronik, die zumindest eine Leiterplatte (12) aufweist, wobei die Leiterplatte (12) dem Ende (16) der Welle (5) gegenüberliegend angeordnet ist, und wobei die Leiterplatte (12) in einem Gehäuse (2) angeordnet ist, in welchem mehrere betätigbare Ventile (6), insbesondere Magnetventile, angeordnet sind, wobei der Drehwinkelsensor (13) auf der Leiterplatte (12) angeordnet ist, wobei der Elektromotor (7) in einem ersten Gehäuseteil (2'), der Verbraucher (3) in einem zweiten Gehäuseteil (2") und die Ansteuerelektronik (11) in einem dritten Gehäuseteil (2"') des Gehäuses (2) angeordnet ist, **dadurch gekennzeichnet, dass** der Drehwinkelsensor (13) zwischen den Ventilen (6) in dem zweiten Gehäuseteil (2") angeordnet ist.

2. Aktuatoreinrichtung nach Anspruch 1, **dadurch gekennzeichnet, dass** der Verbraucher (3) zwischen dem Elektromotor (7) und dem Drehwinkelsensor (13) angeordnet ist.

3. Aktuatoreinrichtung nach einem der vorhergehenden Ansprüche, **dadurch gekennzeichnet, dass** an dem Ende (16) der Welle (5), insbesondere an der Stirnseite (15), wenigstens ein Drehwinkelgeber (17) angeordnet ist.

4. Aktuatoreinrichtung nach einem der vorhergehenden Ansprüche, **dadurch gekennzeichnet, dass** der Verbraucher (3) eine Hydraulikpumpe (3) ist.

5. Bremssystem für ein Fahrzeug, insbesondere Kraftfahrzeug, mit wenigstens einer Radbremse und mit wenigstens einer Aktuatoreinrichtung (1) zum Betätigen der Radbremse, **gekennzeichnet durch** die Ausbildung der Aktuatoreinrichtung (1) nach einem der Ansprüche 1 bis 4.

## Claims

1. Actuator device (1) for a vehicle, in particular for a brake system of a motor vehicle, comprising at least one electronically commutated electric motor (7) which has a rotor (9) arranged in a rotationally fixed manner on a rotatably mounted shaft (5), and comprising at least one angle of rotation sensor (13) for detecting a rotational position of the rotor (9), wherein the shaft (5) is connected to at least one consumer (3) which is to be driven by the electric motor (7), wherein the angle of rotation sensor (13) is associated with an end (16) of the shaft (5) that is associated with the consumer (3), wherein the angle of rotation sensor (13) is arranged in a manner situated opposite an end side (15) of the shaft (5) at the end (16) of the shaft (5) and wherein the actuator device (1) is **characterized by** a drive electronics system (11), in particular power electronics system, which has at least one printed circuit board (12), wherein the printed circuit board (12) is arranged in a manner situated opposite the end (16) of the shaft (5), and wherein the printed circuit board (12) is arranged in a housing (2) in which a plurality of operable valves (6), in particular solenoid valves, are arranged, wherein the angle of rotation sensor (13) is arranged on the printed circuit board (12), wherein the electric motor (7) is arranged in a first housing part (2'), the consumer (3) is arranged in a second housing part (2'') and the drive electronics system (11) is arranged in a third housing part (2‴) of the housing (2), **characterized in that** the angle of rotation sensor (13) is arranged between the valves (6) in the second housing part (2").

2. Actuator device according to Claim 1, **characterized in that** the consumer (3) is arranged between the electric motor (7) and the angle of rotation sensor (13).

3. Actuator device according to one of the preceding claims, **characterized in that** at least one angle of rotation encoder (17) is arranged at the end (16) of the shaft (5), in particular on the end side (15).

4. Actuator device according to one of the preceding claims, **characterized in that** the consumer (3) is a hydraulic pump (3).

5. Brake system for a vehicle, in particular motor vehicle, comprising at least one wheel brake and comprising at least one actuator device (1) for operating the wheel brake, **characterized by** designing the actuator device (1) according to one of Claims 1 to 4.

## Revendications

1. Dispositif d'actionnement (1) destiné à un véhicule, notamment à un système de freinage d'un véhicule automobile, ledit dispositif d'actionnement comprenant au moins un moteur électrique (7) à commutation électronique qui comporte un rotor (9) disposé solidairement en rotation sur un arbre (5) monté de manière rotative, et au moins un capteur d'angle de rotation (13) destiné à détecter une position en rotation du rotor (9), l'arbre (5) étant relié à au moins un consommateur (3) destiné à être entraîné par le moteur électrique (7), le capteur d'angle de rotation (13) étant associé à une extrémité (16) de l'arbre (5) qui est associée au consommateur (3), le capteur d'angle de rotation (13) étant disposé en regard d'un côté frontal (15) de l'arbre (5) à l'extrémité (16) de l'arbre (5) et le dispositif d'actionnement (1) étant **caractérisé par** une électronique de commande (11), en particulier une électronique de puissance, qui comporte au moins une carte de circuit imprimé (12), la carte de circuit imprimé (12) étant disposée en regard de l'extrémité (16) de l'arbre (5), et la carte de circuit imprimé (12) étant disposée dans un boîtier (2) dans lequel sont disposées une pluralité de vannes actionnables (6), en particulier d'électrovannes, le capteur d'angle de rotation (13) étant disposé sur la carte de circuit imprimé (12), le moteur électrique (7) étant disposé dans une première partie de boîtier (2'), le consommateur (3) étant disposé dans une deuxième partie de boîtier (2") et l'électronique de commande (11) étant disposée dans une troisième partie de boîtier (2‴) du boîtier (2), **caractérisé en ce que** le capteur d'angle de rotation (13) est disposé entre les vannes (6) dans la deuxième partie de boîtier (2").

2. Dispositif d'actionnement selon la revendication 1, **caractérisé en ce que** le consommateur (3) est disposé entre le moteur électrique (7) et le capteur d'angle de rotation (13).

3. Dispositif d'actionnement selon l'une des revendications précédentes, **caractérisé en ce qu'**au moins un codeur rotatif (17) est disposé à l'extrémité (16) de l'arbre (5), notamment sur le côté frontal (15) .

4. Dispositif d'actionnement selon l'une des revendications précédentes, **caractérisé en ce que** le consommateur (3) est une pompe hydraulique (3).

5. Système de freinage d'un véhicule, notamment d'un véhicule automobile, ledit système de freinage comprenant au moins un frein de roue et au moins un dispositif d'actionnement (1) destiné à actionner le frein de roue, **caractérisé en ce que** le dispositif d'actionnement (1) est conçu selon l'une des revendications 1 à 4.
